# EUROPÄISCHE PATENTANMELDUNG

(11) **EP 2 112 463 A1**
(43) Veröffentlichungstag der Anmeldung: **28.10.2009**
(21) Anmeldenummer: 08007953.6
(22) Anmeldetag: 24.04.2008
(51) Int. Cl.: G01B 9/00, G01B 21/04, G02B 5/12, G02B 7/182

(54) **Zwischenadapter zur Platzierung von Retroreflektoren unterschiedlicher Größe auf Standard-Bohrungsadapter**

(71) Anmelder: AfM Technology GmbH, 73430 Aalen (DE)
(72) Erfinder: Heimer, Dietmar, 55122 Mainz (DE)
(74) Vertreter: Grünecker, Kinkeldey, Stockmair & Schwanhäusser Anwaltssozietät

(57) **Zusammenfassung**

Die Erfindung betrifft einen Adapteraufsatz zur Adaption einer Bohrung in der 3D-Koordinatenmesstechnik, welcher auf einen Bohrungsadapter mit einer ersten Aufnahme für einen ersten Retroreflektor mit einem ersten Kugeldurchmesser aufsetzbar ist, und der Adapteraufsatz eine zweite Aufnahme für einen zweiten Retroreflektor mit einem zweiten Kugeldurchmesser aufweist, wobei der zweite Durchmesser größer als der erste Durchmesser ist. Die Erfindung betrifft weiterhin ein Positionierungselement zur Adaption einer Bohrung in der 3D-Koordinatenmesstechnik durch Positionierung der relativen Lage eines ersten Standard-Bohrungsadapters mit einer ersten Aufnahme für einen ersten Retroreflektor mit einem ersten Kugeldurchmesser und einem Adapteraufsatzes, welches derart ausgebildet ist, dass durch Kombination des ersten Standard-Bohrungsadapters mit dem Positionierungselement und mit dem Adapteraufsatz ein Standard-Bohrungsadapter mit einer zweiten Aufnahme für einen zweiten Retroreflektor mit einem zweiten Kugeldurchmesser emuliert werden kann.

## Beschreibung

### Gebiet der Erfindung

Die Erfindung betrifft einen Adapteraufsatz zur Adaption einer Bohrung in der 3D-Koordinatenmesstechnik und ein Positionierungselement zur Positionierung der relativen Lage eines ersten Standard-Bohrungsadapters mit einer ersten Aufnahme für einen ersten Retroreflektor mit einem ersten Kugeldurchmesser und des Adapteraufsatzes. Die Erfindung betrifft weiterhin einen Bohrungsadapter sowie ein System zur Adaption von Bohrungen für die 3D-Koordinatenmesstechnik.

### Stand der Technik

In der 3D Koordinatenmesstechnik werden Punkte nicht nur direkt, sondern auch indirekt gemessen. Dies geschieht normalerweise mit Adaptem die man bei verschiedenen Herstellern als Zubehör erwerben kann. Die Technik ist am Markt etabliert und wird vorwiegend für Messungen mit 3D Koordinatenmessgeräten eingesetzt. Dabei wird beispielsweise eine Bohrung so adaptiert, dass der Schnittpunkt der Zylinderachse mit einer rechtwinklig dazu verlaufenden Ebene dem zu bestimmenden Punkt in einen definierten Abstand entlang der Zylinderachse entspricht.

Da man für Messungen mit beispielsweise einem Laser-Tracker einen kugelförmigen Retroreflektor nutzt, muss so ein Adapter eine Aufnahme besitzen, die z.B. ein Ausschnitt einer Kugel oder eines Kegels ist, um das Antastelement in einem definierten Abstand zu fixieren. Bei Messungen mit einem Laser-Tracker werden Retroreflektoren mit unterschiedlichen Durchmessern benutzt, sodass man für die Adaptierung einer Bohrung mehrere Adapter (Bohrungsadapter) für unterschiedliche Retroreflektordurchmesser benötigt. Üblich sind hier im Wesentlichen Retroreflektordurchmesser von 0,5" und 1,5", seltener auch noch 0,875". Für die Bohrungsdurchmesser gibt es mehrere unterschiedliche Standardwerte, beispielsweise 6, 8, 10, 12, 14, 16, 18 mm.

Bisher wurde für jeden Bohrungsdurchmesser jeweils ein Adapter für die zwei bzw. drei Retroreflektordurchmesser benötigt. Um z.B. für 7 verschiedene Bohrungsdurchmesser 2 unterschiedliche Retroreflektoren verwenden zu können wird eine Satz von 14 Adapetern benötigt. Dies ist nachteilig, da insbesondere die Adapter für den großen Retroreflektordurchmesser von 1,5" teuer und schwer sind.

### Beschreibung der Erfindung

Angesichts der Nachteile des Stands der Technik, liegt der Erfindung das Problem zugrunde, die oben genannten Nachteile zu überwinden.

Das genannte Problem wird gelöst durch einen Adapteraufsatz zur Adaption einer Bohrung in der 3D-Koordinatenmesstechnik, welcher auf einen Bohrungsadapter mit einer ersten Aufnahme für einen ersten Retroreflektor mit einem ersten Kugeldurchmesser aufsetzbar ist, wobei der Adapteraufsatz eine zweite Aufnahme für einen zweiten Retroreflektor mit einem zweiten Kugeldurchmesser aufweist, und wobei der zweite Durchmesser größer als der erste Durchmesser ist.

Mittels dieses Adapteraufsatzes kann z. B. ein Standard-Bohrungsadapter mit einer Aufnahme für einen Retroreflektor von 0,5" Kugeldurchmesser aufgesetzt werden, um dadurch z. B. einen Standard-Bohrungsadapter mit einer Aufnahme für einen Retroreflektor mit einem Kugeldurchmesser von 1,5" zu emulieren. Dabei wird sichergestellt, dass der Schnittpunkt der Symmetrieachse der Auflagefläche mit einer rechtwinklig dazu verlaufenden Ebene einen vorbestimmten Abstand von dem zu bestimmenden Punkt entlang der Symmetrieachse hat.

Einen Weiterbildung des erfindungsgemäßen Adapteraufsatzes besteht darin, dass die zweite Aufnahme einen Magneten umfassen kann. Dieser Magnet kann beispielsweise in einer Ausnehmung der zweiten Aufnahme angeordnet sein und dient dazu, einen aufgesetzten Retroreflektor über magnetische Kräfte auf dem Adapteraufsatz zu haltern.

Eine andere Weiterbildung des Adapteraufsatzes besteht darin, dass der Adapteraufsatz eine Öffnung aufweisen kann, in die ein komplementär dazu ausgebildeter Zapfen eines Positionierungselements einfügbar ist. Auf diese Weise kann eine hochgenaue Positionierung zur Adaptierung der zu messenden Bohrung mit einem Retroreflektor mit einem zweiten Kugeldurchmesser (z.B. 1,5") erfolgen.

Eine andere Weiterbildung des Adapteraufsatzes besteht darin, dass die zweite Aufnahme mit einer Auflagefläche ausgebildet sein kann, welche Teil eines Kegels oder einer Kugel ist. Dadurch kann der kugelförmige zweite Retroreflektor stabil auf dem Adapteraufsatz aufgebracht werden.

Eine andere Weiterbildung des Adapteraufsatzes besteht darin, dass der Adapteraufsatz eine Ausnehmung aufweisen kann, in welche die Aufnahme eines Bohrungsadapters einfügbar ist. Dadurch, dass die Aufnahme des Bohrungsadapters in die Ausnehmung einfügbar ist, kann die Aufnahme eines Standardbohrungsadapters in den Adapteraufsatz versenkt werden, wodurch in Kombination ein Standard-Bohrungsadapter für einen Retroreflektor mit größerem Durchmesser (z.B. 1,5") emuliert werden kann.

Eine andere Weiterbildung der zuvor genannten Weiterbildung besteht darin, dass die Ausnehmung derart ausgebildet sein kann, dass der Bohrungsadapter selbstzentrierend einfügbar ist, vorzugsweise mittels einer konischen Abschrägung des Randes der Ausnehmung. Auf diese Weise kann der Adapteraufsatz einfach und sicher auf den Bohrungsadapter aufgesetzt werden.

Das oben genannte Problem wird erfindungsgemäß weiterhin gelöst durch ein Positionierungselement zur Adaption einer Bohrung in der 3D-Koordinatenmesstechnik durch Positionierung der relativen Lage eines ersten Standard-Bohrungsadapters mit einer ersten Aufnahme für einen ersten Retroreflektor mit einem ersten Kugeldurchmesser eines erfindungsgemäßen Adapteraufsatzes oder einer seiner Weiterbildungen, wobei das Positionierungselement derart ausgebildet ist, dass durch Kombination des ersten Standard-Bohrungsadapters mit dem Positionierungselement und mit dem Adapteraufsatz ein Standard-Bohrungsadapter mit einer zweiten Aufnahme für einen zweiten Retroreflektor mit einem zweiten Kugeldurchmesser emuliert werden kann.

Das erfindungsgemäße Positionierungselement stellt eine hochgenaue Verbindung zwischen einem Standard-Bohrungsadapter und dem erfindungsgemäßen Adapteraufsatz zur Verfügung.

Eine Weiterbildung des erfindungsgemäßen Positionierungselements besteht darin, dass das Positionierungselement eine konische Fläche aufweisen, die einer dazu komplementären konischen Fläche der ersten Aufnahme entspricht. Auf diese Weise wird eine exakte relative Lagerung des Positionierungselements und des ersten Standard-Bohrungsadapters erzielt.

Eine andere Weiterbildung des Positionierungselements besteht darin, dass das Positionierungselement einen Zapfen aufweisen kann, der in eine dazu komplementäre Öffnung des Adapteraufsatzes einfügbar ist. Auf diese Weise kann eine exakte relative Positionierung und Zentrierung des Adapteraufsatzes in Bezug auf das Positionierungselement, und infolgedessen auch in Bezug auf den ersten Standard-Bohrungsadapter erreicht werden.

Das erfindungsgemäße Problem wird weiterhin gelöst durch einen Bohrungsadapter zur Adaption einer Bohrung in der 3D-Koordinatenmesstechnik, welcher einen Standard-Bohrungsadapter mit einer ersten Aufnahme für einen ersten Retroreflektor mit einem ersten Kugeldurchmesser und ein erfindungsgemäßes Positionierungselement oder eine seiner Weiterbildungen umfasst.

Durch diese Kombination kann auf einfache Weise aus einem Standard-Bohrungsadapter der beispielsweise für einen 0,5" Retroreflektor geeignet ist, ein Adapter zur Verwendung mit einem erfindungsgemäßen Adapteraufsatz hergestellt werden, so dass zusätzlich mit dem Adaperaufsatz ein 1,5" Retroreflektor verwendet werden kann.

Eine Weiterbildung des Bohrungsadapters besteht darin, dass das Positionierungselement mittels eines Magneten, durch Einkleben oder durch Verschrauben mit dem Standard-Bohrungsadapter verbunden sein kann.

Das oben genannte Problem wird weiterhin gelöst durch ein System zur Adaption von Bohrungen für die 3D-Koordinatenmesstechnik, welches umfasst: mehrere erfindungsgemäße Bohrungsadapter für unterschiedliche Bohrungsdurchmesser, sowie einen erfindungsgemäßen Adapteraufsatz.

Durch dieses System werden mehreren Bohrungsadapter für unterschiedliche Bohrungsdurchmesser zur Verfügung gestellt, welche jeweils einen Standard-Bohrungsadapter und ein erfindungsgemäßes Positionierungselement enthalten, und wobei lediglich ein Adapteraufsatz zur Anpassung an einen größeren Durchmesser der Retroreflektoren erforderlich ist. Dies hat den Vorteil, dass lediglich ein vollständiger Satz von Standard-Bohrungsadaptem für einen kleinen Durchmesser der Retroreflektoren gekauft und transportiert werden muss, und die Anpassung an einen größeren Retroreflektordurchmesser durch den einen Adapteraufsatz erfolgt, sodass sich eine Einsparung dahingehend ergibt, dass Standard-Bohrungsadapter für größere Durchmesser der Retroreflektoren (1,5") nicht mehr für unterschiedliche Bohrungsdurchmesser erforderlich sind.

Ausgewählte bevorzugte Ausführungsformen der Erfindung sind nachfolgend nochmals dargelegt.

Die Erfindung umfasst einen neuartigen Adapter, der es ermöglicht alle Retroreflektordurchmesser mit nur einem Adapter zu adaptieren. Dadurch benötigt man für Messungen von Bohrungen bedeutend weniger Adapter, wodurch es möglich ist, wirtschaftlicher und flexibler Bohrungen zu adaptieren.

Der Adapter besteht aus zwei Teilen, einer selbstzentrierenden magnetischen Aufnahme für einen 1,5" Durchmesser Retroreflektor und einer selbstzentrierenden magnetischen Aufnahme für einen Retroreflektor mit 0,5" Durchmesser. Beide Aufnahmen sind so gefertigt, dass sie mit einem vernachlässigbar kleinem Spiel, selbstzentrierend ineinander gesteckt werden können, wobei die Aufnahme für den 0,5" Durchmesser Retroreflektor mit einem hochgenauen Zapfen zur Adaptierung der zu messenden Bohrung versehen ist.

Die verschiedenen Weiterbildungen lassen sich unabhängig voneinander einsetzen oder miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1A - 1 F: zeigen verschiedene Ansichten des erfindungsgemäßen Adapteraufsatzes.
- Fig. 2A - 2D: zeigen verschiedene Ansichten eines erfindungsgemäßen Positionie- rungselements.
- Fig. 3: zeigt eine Kombination des erfindungsgemäßen Adapteraufsatzes nach Fig. 1 und des erfindungsgemäßen Positionierungselements nach Fig. 2 mit einem Standard-Bohrungsadapter.

### Beschreibung der Ausführungsformen

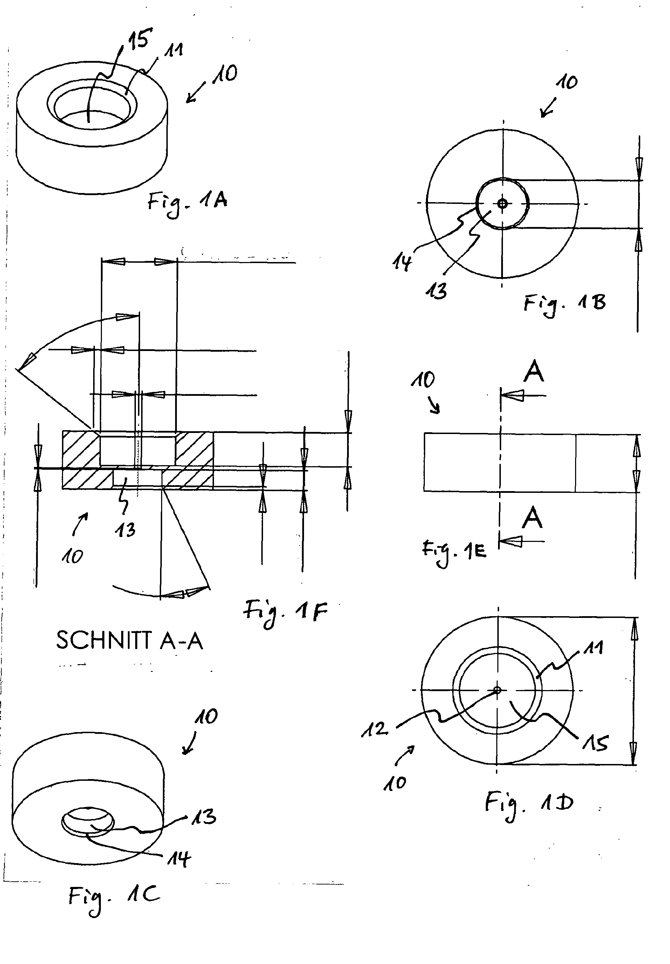

Die Figuren 1A - 1F zeigen verschieden Ansichten des erfindungsgemäßen Adapteraufsatzes 10.

Der Adapteraufsatz 10 ist zylindrisch ausgebildet, vorzugsweise aus Automatenstahl, und weist eine Aufnahme 11 mit einer Auflagefläche auf, die als Teil eines Kegels geformt ist. Auf diese Auflagefläche kann ein Retroreflektor mit einem Kugeldurchmesser von 1,5" aufgelegt werden. In der Ausnehmung 15 kann ein Magnet zur magnetischen Halterung des Retroreflektors angeordnet sein.

Der Adapteraufsatz weist weiterhin eine zentrale Öffnung 12 auf, in die ein komplementär dazu ausgebildeter Zapfen eines Positionierungselements einfügbar ist. Zudem weist der Adapteraufsatz eine Ausnehmung 13 auf, in welche die Aufnahme eines Bohrungsadapters einfügbar ist. Die Ausnehmung 13 ist derart ausgebildet, dass der Bohrungsadapter selbstzentrierend eingefügt werden kann. Dazu ist eine konische Abschrägung 14 am Rande der Ausnehmung 13 vorgesehen.

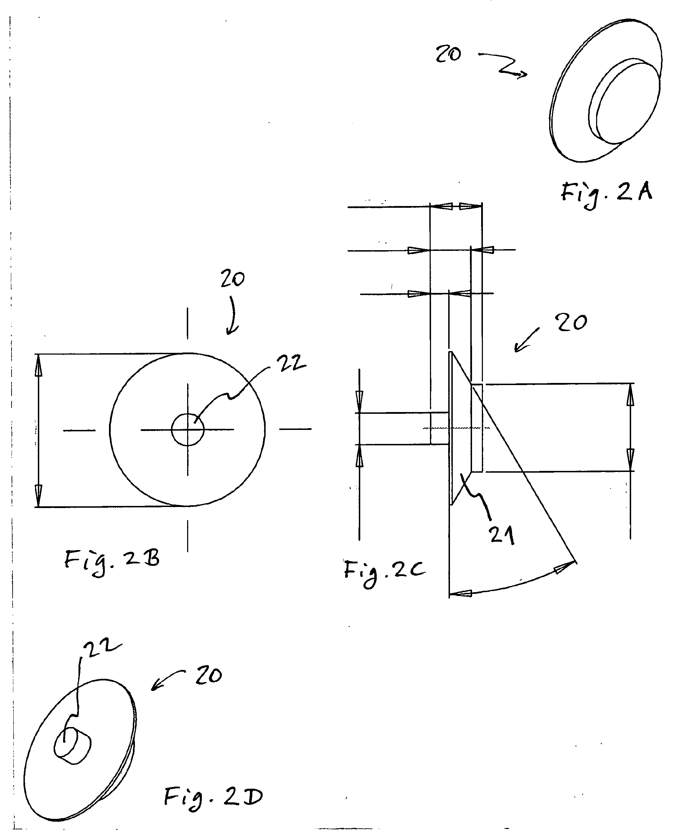

Die Figuren 2A bis 2D zeigen verschiedene Ansichten eines erfindungsgemäßen Positionierungselements 20.

Das Positionierungselement dient der Positionierung der relativen Lage eines Standard-Bohrungsadapters für Retroreflektoren mit einem Durchmesser von 0,5" und eines erfindungsgemäßen Adapteraufsatzes 10 nach Figur 1. Das Positionierungselement ist derart ausgebildet, dass durch die Kombination des Standard-Bohrungsadapters mit dem Positionierungselement 20 und mit dem Adapteraufsatz 10 ein Standard-Bohrungsadapter für einen Retroreflektor mit einem Kugeldurchmesser von 1,5" emuliert wird, d. h., die genannte Kombination weist die gleiche Funktionalität auf, wie ein Standard-Bohrungsadapter für Retroreflektoren mit einem Durchmesser von 1,5".

Das Positionierungselement weist eine konische Fläche 21 auf, die einer konischen Fläche der Aufnahme des Standard-Bohrungsadapters für 0,5" Retroreflektoren dazu komplementär entspricht. Zudem weist das Positionierungselement 20 einen Zapfen 22 auf, der in die dazu komplementäre Öffnung 12 des Adapteraufsatzes 10 einfügbar ist.

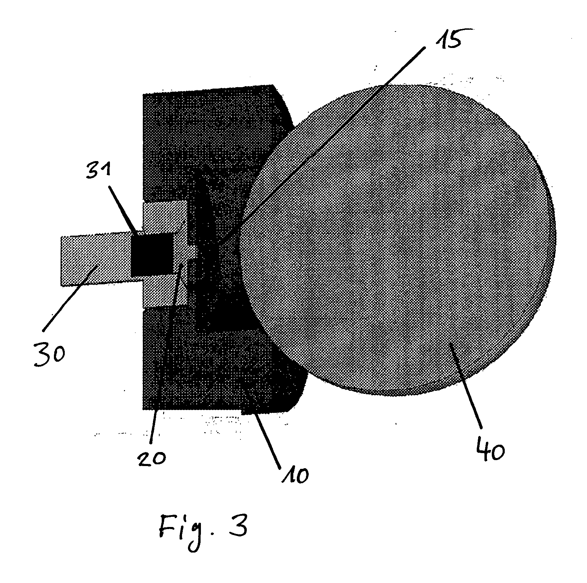

Figur 3 zeigt die Kombination des erfindungsgemäßen Adapteraufsatzes 10 nach Figur 1 mit dem erfindungsgemäßen Positionierungselement 20 nach Figur 2 und mit einem Standard-Bohrungsadapter 30 für Retroreflektoren mit einem Durchmesser von 0,5".

Weiterhin zeigt Figur 3 einen auf dieser Kombination aufgebrachten Retroreflektor 40 mit einem Durchmesser von 1.5". Diese Anordnung umfasst zudem einen Magneten 31 zur Halterung des Positionierungselements 20 auf dem Standard-Bohrungsadapter 30.

## Patentansprüche

1. Adapteraufsatz (10) zur Adaption einer Bohrung in der 3D-Koordinatenmesstechnik, welcher auf einen Bohrungsadapter (30, 20) mit einer ersten Aufnahme für einen ersten Retroreflektor mit einem ersten Kugeldurchmesser aufsetzbar ist, wobei der Adapteraufsatz eine zweite Aufnahme (11) für einen zweiten Retroreflektor (40) mit einem zweiten Kugeldurchmesser aufweist, und wobei der zweite Durchmesser größer als der erste Durchmesser ist.

2. Adapteraufsatz nach Anspruch 1, wobei die zweite Aufnahme einen Magneten umfasst.

3. Adapteraufsatz nach Anspruch 1 oder 2, mit einer Öffnung (12), in die ein komplementär dazu ausgebildeter Zapfen (22) eines Positionierungselements einfügbar ist.

4. Adapteraufsatz nach einem der Ansprüche 1 bis 3, wobei die zweite Aufnahme (11) mit einer Auflagefläche (11) ausgebildet ist, welche Teil eines Kegels oder einer Kugel ist.

5. Adapteraufsatz nach einem der Ansprüche 1 bis 4, wobei der Adapteraufsatz eine Ausnehmung (13) aufweist, in welche die Aufnahme eines Bohrungsadapters (30) einfügbar ist.

6. Adapteraufsatz nach Anspruch 5, wobei die Ausnehmung derart ausgebildet ist, dass der Bohrungsadapter selbstzentrierend einfügbar ist, vorzugsweise mittels einer konischen Abschrägung (14) des Randes der Ausnehmung.

7. Positionierungselement (20) zur Adaption einer Bohrung in der 3D-Koordinatenmesstechnik durch Positionierung der relativen Lage eines ersten Standard-Bohrungsadapters (30) mit einer ersten Aufnahme für einen ersten Retroreflektor mit einem ersten Kugeldurchmesser und eines Adapteraufsatzes nach einem der Ansprüche 1 bis 6, welches derart ausgebildet ist, dass durch Kombination des ersten Standard-Bohrungsadapters mit dem Positionierungselement (20) und mit dem Adapteraufsatz (10) ein Standard-Bohrungsadapter mit einer zweiten Aufnahme für einen zweiten Retroreflektor (40) mit einem zweiten Kugeldurchmesser emuliert werden kann.

8. Positionierungselement nach Anspruch 7, wobei das Positionierungselement eine konische Fläche (21) aufweist, die einer dazu komplementären konischen Fläche der ersten Aufnahme entspricht.

9. Positionierungselement nach Anspruch 7 oder 8, wobei das Positionierungselement einen Zapfen (22) aufweist, der in eine dazu komplementäre Öffnung (12) des Adapteraufsatzes einfügbar ist.

10. Bohrungsadapter (30, 20) zur Adaption einer Bohrung in der 3D-Koordinatenmesstechnik, umfassend:
ein Standard-Bohrungsadapter (30) mit einer ersten Aufnahme für einen ersten Retroreflektor mit einem ersten Kugeldurchmesser, und
ein Positionierungselement (20) nach einem der Ansprüche 7 bis 9.

11. Bohrungsadapter nach Anspruch 10, wobei das Positionierungselement mittels eines Magneten, durch Einkleben oder durch Verschrauben mit dem Standard-Bohrungsadapter verbunden ist.

12. System zur Adaption von Bohrungen für die 3D-Koordinatenmesstechnik, umfassend:
mehrere Bohrungsadapter (30, 20) für unterschiedliche Bohrungsdurchmesser, jeweils nach einem der Ansprüche 10 oder 11, und
einen Adapteraufsatz (10) nach einem der Ansprüche 1 bis 6.
